Europäisches Patentamt

European Patent Office

Office européen des brevets

(19)

(11) Veröffentlichungsnummer: **0 076 980**
**B1**

(12) **EUROPÄISCHE PATENTSCHRIFT**

(45) Veröffentlichungstag der Patentschrift:
27.08.86

(51) Int. Cl.⁴: **B 29 C 45/12**

(21) Anmeldenummer: **82109056.0**

(22) Anmeldetag: **30.09.82**

(54) **Mehrfach-Spritzgiessform.**

(30) Priorität: 14.10.81 DE 3140711
31.07.82 DE 3228743

(43) Veröffentlichungstag der Anmeldung:
20.04.83 Patentblatt 83/16

(45) Bekanntmachung des Hinweises auf die Patenterteilung:
27.08.86 Patentblatt 86/35

(84) Benannte Vertragsstaaten:
AT BE CH DE FR GB IT LI NL

(56) Entgegenhaltungen:
DE - A - 2 148 616
DE - B - 2 605 735
FR - A - 2 421 047
US - A - 3 774 874
US - A - 4 207 051
US - A - 4 239 471
US - A - 4 259 056

(73) Patentinhaber: Maschinenfabrik Köppern GmbH. & Co. KG, Königsteiner Strasse 2-12, D-4320 Hattingen 1 (DE)

(72) Erfinder: Blank, Michael, Am Hochsitz 27,
D-5600 Wuppertal 1 (DE)
Erfinder: Hammerschmidt, Horst, Am Schamberg 8,
D-4320 Hattingen (DE)

(74) Vertreter: Gralfs, Harro, Dipl.-Ing. et al, Am Bürgerpark 8,
D-3300 Braunschweig (DE)

## Beschreibung

Die Erfindung bezieht sich auf eine bekannte Mehrfach-Spritzgiessform der im Oberbegriff des Patentanspruches 1 genannten Art.

Bei bekannten Mehrfach-Spritzgiessformen sind die Aussenformen in Innengehäusen ausgebildet, die in Bohrungen einer gemeinsamen Platte eingesetzt sind. Die Formbacken nebeneinanderliegender Einzelformen sind dabei auf Leisten angeordnet, die sich jeweils über mehrere in einer Reihe angeordnete Einzelformen erstrecken. Diese Leisten sind auf schrägen Führungsflächen geführt. Derartige Spritzgiessformen sind zur Erzielung einer möglichst hohen Wirtschaftlichkeit im allgemeinen für eine Vielzahl von Vorformlingen, im allgemeinen für 16 oder auch 32 Vorformlinge ausgelegt.

Es ist weiter eine Mehrfach-Spritzgiessform bekannt (DE-OS 2 148 616), die als kombinierte Spritzgiess- und Blasform für ein einstufiges Spritz-Blasverfahren ausgebildet ist. Bei dieser bekannten Spritzgiessform liegen die Aussenformen der Spritzgiessstationen auf einem Kreis um eine Drehachse, um die die beiden Formteile gegeneinander schwenkbar sind. Die Formbohrungen sind dabei jeweils in Innengehäusen ausgebildet, die in einer gemeinsamen Platte angeordnet sind, in der alternierend Innengehäuse für die Blasformen angeordnet sind. Zur Ausbildung der Halsaussenkontur der Vorformlinge sind hierbei geteilte Formbacken vorgesehen, die in einer Zwischenplatte auf schrägen Führungsflächen geführt sind und jeweils mit gesonderten Hydraulikantrieben in der Ebene der Stützflächen verschiebbar sind. Die Formbacken sind hierbei für jede Spritzgiessstation bedingt durch Aufbau und Funktion der Form gesondert. Die Führungen sind jedoch alle in der Zwischenplatte ausgebildet.

An Vorformlinge für die Herstellung von Behältern, insbesondere Flaschen, im Blasverfahren werden hohe Anforderungen an die Gleichmässigkeit der Wandstärke, die Gratfreiheit im Verschlussbereich des Flaschenhalses und die Konstanz des Gewichtes gestellt. Weiter sind derartige Formen für das Spritzgiessen mit Polyäthylenterephthalat (PETP) auszulegen. PETP ist ein Material, das bei Temperaturen zwischen 80 °C und 250 °C kristallisiert. Es ist daher mit einer Temperatur über 250 °C zu verspritzen und zur Sicherstellung einer amorphen Struktur der Spritzlinge mit hoher Geschwindigkeit auf eine Temperatur unter 80 °C abzukühlen. Dies führt zu ausserordentlichen thermischen Belastungen der Formteile im Betrieb und unterschiedlichen Wärmedehnungen in den einzelnen Formplatten. Diese Wärmedehnungen müssen bei der Fertigung berücksichtigt werden, damit bei Betriebstemperatur die Koaxialität aller Bauteile sichergestellt ist. Dies erfordert für die Herstellung derartiger Mehrfach-Spritzgiessformen einen erheblichen Aufwand.

Aufgabe der Erfindung ist es, eine Mehrfach-Spritzgiessform zu schaffen, die in besonderer Weise den auftretenden thermischen Problemen Rechnung trägt und zu einer einfacheren Art der Herstellung führt.

Diese Aufgabe wird gemäss der Erfindung gelöst durch die im kennzeichnenden Teil des Patentanspruches 1 herausgestellten Merkmale. Zweckmässige Ausgestaltungen der Erfindung sind Gegenstand der Unteransprüche.

Die Erfindung ist in der Zeichnung beispielsweise veranschaulicht und im nachstehenden im einzelnen anhand der Zeichnung beschrieben.

Fig. 1 zeigt eine Ausführungsform einer Mehrfachspritzgiessform gemäss der Erfindung in geschlossenem Zustand, wobei die Form links geschnitten und rechts teilweise geschnitten dargestellt ist.

Fig. 2 zeigt eine Draufsicht auf eine die Formbacken tragende Zwischenplatte der Spritzgiessform nach Fig. 1.

Fig. 3 zeigt einen Schnitt längs der Linie III–III in Fig. 2.

Fig. 4 zeigt einen Schnitt längs der Linie IV–IV in Fig. 1.

Fig. 5 zeigt eine Seitenansicht einer Ausführungsform einer Spritzgiessform gemäss der Erfindung im geschlossenen Zustand.

Fig. 6 zeigt die Spritzgiessform gemäss Fig. 5 wiederum von der Seite gesehen im geöffneten Zustand.

Fig. 7 zeigt die Teilentformung eines mit Entlüftungsschlitzen versehenen Flaschenhalsgewindes, etwa im Schnitt längs der Linie VII–VII in Fig. 1.

Fig. 8 zeigt eine Draufsicht auf eine die Formbacken tragende Zwischenplatte eines Sechzehnfach-Werkzeuges.

Die in der Zeichnung dargestellte Mehrfach-Spritzgiessform weist eine an der Spritzgiessmaschine über eine Befestigungsplatte 2 befestigbare erste Formhälfte 4 und eine relativ dazu in Öffnungsrichtung maschinenbewegliche zweite Formhälfte 6 auf. Die Formhälfte 4 trägt auf der Befestigungsplatte 2 zwei weitere aufeinanderliegende Platten 8 und 10. Auf der Platte 10 ist eine Vielzahl von separaten Formgehäusen bzw. Aussenformen 12 angeordnet. Von diesen Formgehäusen können beispielsweise sechzehn in zwei Reihen von jeweils acht Formgehäusen angeordnet werden. Es können aber auch vier Reihen mit jeweils vier Formgehäusen vorgesehen werden oder eine andere zweckmässige Anordnung.

Die Formgehäuse 12 weisen bei dem dargestellten Ausführungsbeispiel jeweils ein Aussengehäuse 14 auf, in dem ein Innengehäuse 16 angeordnet ist, auf dessen Aussenseite Nuten 18 ausgebildet sind, die nach dem Einsetzen in das Aussengehäuse 14 in bekannter Weise Kühlkanäle bilden, die mit Zu- und Ablaufanschlüssen versehen sind. In dem Innengehäuse 16 ist eine Formbohrung 20 ausgebildet, die die Aussenkontur des Formhohlraumes 22 bildet.

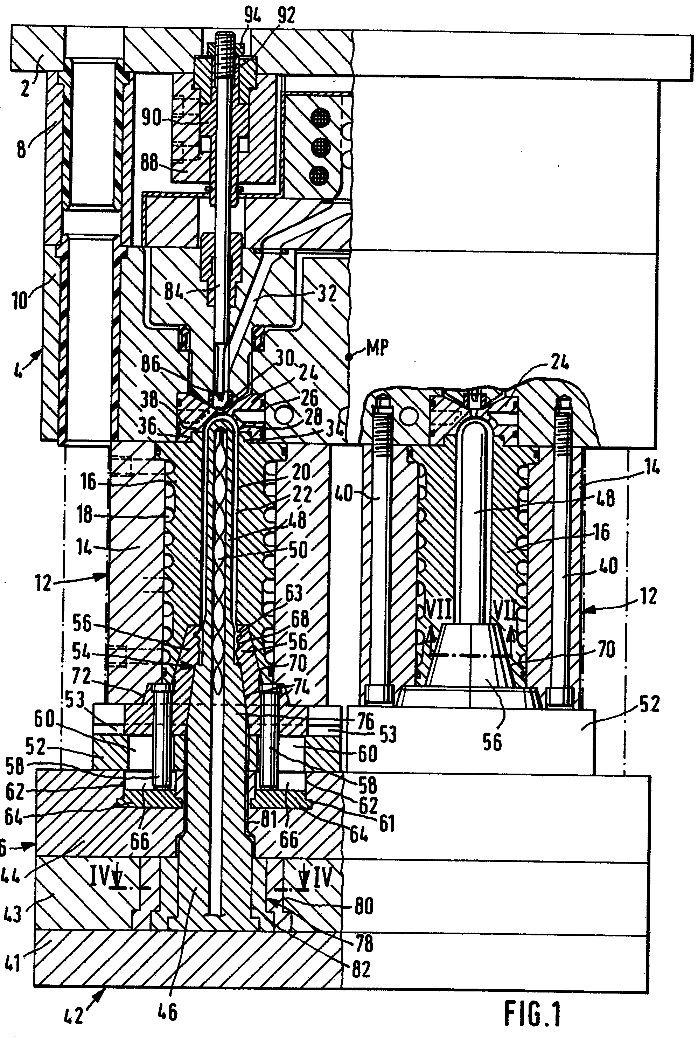

In die Platte 10 eingelassen sind Formelemente 24, die in Bohrungen 26 eingesetzt sind. Die Formelemente 24 tragen auf ihrer Aussenseite eine Ausnehmung 28 in Form einer Kugelkalotte, die die Aussenkontur für den Boden des Formhohlraumes 22 bildet. In dem Formelement 24 ist weiter der Angusskanal 30 ausgebildet, der mit einem Heissläuferverteilersystem 32 bekannter Bauart in Verbindung steht, auf das hier nicht näher eingegangen zu werden braucht. An der Aussenseite des Formelementes 24 ist weiter auf einem grösseren Durchmesser als die Kugelkalottenausnehmung 28 eine zu letzterer koaxiale Vertiefung 34 vorgesehen, in die ein Zentrierstutzen 36 eingreift, der an der Stirnseite des Innengehäuses 16 ausgebildet ist und mit seiner Stirnfläche 38 gegen den Boden der Ausnehmung 34 des Formelementes 24 anliegt. Die Befestigung des Innengehäuses 16 an der Platte 10 erfolgt über das Aussengehäuse 14, und zwar mit Hilfe von Schrauben 40, wie in Fig. 1 rechts dargestellt.

Wie ersichtlich, sind damit die separaten Formgehäuse mit jeweils einer Formbohrung so an der Platte 10 befestigt, dass sie unabhängig Wärmedehnungen der Platte 10 folgen können.

Die maschinenbewegliche Formhälfte 6 weist eine als Doppelplatte ausgebildete Grundplatte 42 mit aufeinander befestigten Einzelplatten 41 und 43 auf und eine hierzu in Schliessrichtung der Form verstellbare Zwischenplatte 44, auf der die weiter unten zu beschreibenden Formbacken, die die den Flaschenhalsstutzen abbildende Innenkontur tragen, angeordnet sind.

In der Kerntragplatte 43 ist der Fuss 46 des dornförmigen Kerns 48 gehalten, der die Innenkontur des Formhohlraumes 22 bestimmt. Der Kern ist in üblicher Weise mit einer axialen Kühlmittelführung 50 versehen, deren Anschluss in üblicher Weise ausgebildet und in der Zeichnung nicht dargestellt ist.

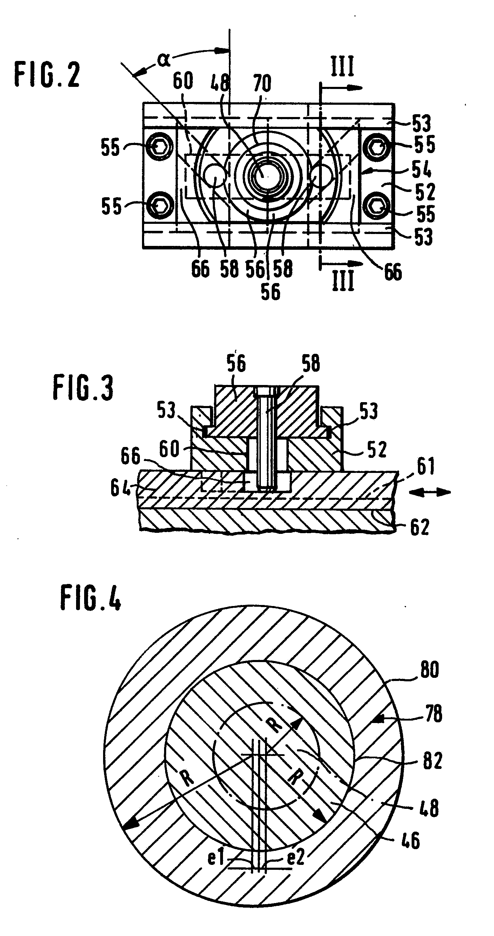

Auf der Oberseite der Zwischenplatte 44 sind Führungsplatten 52 befestigt. Auf jeder Führungsplatte ist ein Formbackenpaar 54 in Führungsnuten 53 quer verschieblich gelagert. Die einzelnen Formbacken 56 sind mit Schubstiften 58 versehen, die durch Durchbrüche 60 in der Führungsplatte 52 hindurchgreifen und sich mit ihren Enden bis unter die Führungsplatte erstrecken. Innerhalb der Zwischenplatte 44 sind jeweils in Abstand voneinander quer zur Verschieberichtung der Formbacken 56 verlaufende hinterschnittene Nuten 62 angeordnet, in denen mit seitlichen Vorsprüngen 61 versehene Verstellstangen 64 quer zur Führung 53 in der Führungsplatte 52 verschieblich gelagert sind. Diese Verstellstangen sind jeweils an einem Ende der Form über Joche 65 miteinander verbunden. An den Jochen sind hydraulische Antriebe mit ihren Zylindern 67 befestigt, während die Kolbenstangen 69 fest mit der Platte 44 verbunden sind. In der Oberseite der Verstellstangen 64 sind jeweils unter einem spitzen Winkel α zu deren Längserstreckung verlaufende Nuten 66 ausgebildet, in die die Enden der Schubstifte 58 eingreifen. Die Nuten sind in den beiden Verstellstangen jeweils entgegengesetzt geneigt wie in Fig. 2 rechts dargestellt.

Bei einem Längsverschieben der beiden Verstellstangen 64 wird mit Hilfe dieser Nuten 66 jeweils der in diese eingreifende Schubstift 58 quer verschoben, wodurch die Formbacken voneinander weg und aufeinander zu bewegt werden.

Die beiden Formbacken 56 tragen an ihrem oberen Ende eine Innenkontur 68, die der gewünschten Kontur des Flaschenhalsstutzens entspricht. Diese Kontur kann beispielsweise eine Gewindekontur sein, wenn als Verschluss ein Schraubverschluss vorgesehen ist. Es kann aber auch eine einfache Wulstkontur sein, wenn als Verschluss ein Kronkorken oder dergleichen vorgesehen ist. Die Innenkontur bildet bei Vorformlingen (preforms) für die Flaschenherstellung im Blasverfahren weiter einen Halsring 63 ab, welcher für die Halterung der Vorformlinge in der Blasmaschine benötigt wird.

Die beiden Formbacken 56 tragen auf ihrer Aussenseite einen Zentrierkonus 70, der in eine Zentrierbohrung in der freien Stirnseite des Innengehäuses 16 eingreift. Alternativ kann auch ein Zentrierkonus 72 vorgesehen werden, der in eine entsprechende Konusbohrung im äusseren Gehäuse 14 eingreift, die von der Stirnseite dieses Gehäuses ausgeht. Über die Zentrierung wird sichergestellt, dass die Innenkontur 68 der Formbacken genau zentrisch zur Aussenkontur 20 der Formbohrung 22 liegt.

Die Formbacken 56 jedes Formbackenpaares 54 sind weiter mit einer von ihrer Unterseite ausgehenden konischen Zentrierbohrung 74 versehen, die mit einem Zentrierkonus 76 zusammenwirkt, der am unteren Ende des Formkerns 48 ausgebildet ist. Über diesen Zentrierkonus 76 wird über das Backenpaar 56 der Formkern 48 innerhalb der Formbohrung 20 zentriert.

Damit bei Wärmedehnungen innerhalb der Platte 10 der Kern 48 seine zentrische Lage in der Formbohrung 20 beibehält, kann die Befestigung des Kernfusses 46 in der Platte 43 mit seitlichem Spiel erfolgen, so dass der Fuss beim Schliessen der Form in der ihn aufnehmenden Bohrung in der Platte 43 über die Zentrierung 74, 76 achsparallel in seine zur Formbohrung zentrische Lage verschiebbar ist. Um die Verschiebung zu ermöglichen, ist die Bohrung 81 in der Platte mit einem entsprechenden Durchmesser ausgebildet.

Eine andere, in Fig. 4 veranschaulichte Möglichkeit der Fusseinstellung für den Kerndorn 48 besteht darin, den Fuss 46 des Kerndorns 48 mit einer vorgegebenen Exzentrizität gegenüber der Achse des Kernabschnittes 48 auszubilden und den Fuss in einer Buchse 78 zu halten, die mit ihrem äusseren Umfang in einer Bohrung 80 drehbar ist, die bei kalter Form vorzugsweise gleichachsig mit der Bohrung 20 liegt und deren Bohrung die gleiche Exzentrizität e2 zum Aussenzylinder der Buchse 78 hat, wie die Exzentrizität e1 des Kernfusses 46 zum Kerndorn. Auf diese Weise ist eine stufenlose Verschiebung des Kerndorns parallel zu seiner Achse innerhalb einer Kreisfläche möglich, deren Radius der Summe der Exzentrizitäten e1 und e2 entspricht. So ist auch bei unterschiedlichen Dehnungen der Platte 42 und der Platte 10 der Kern bei Betriebstemperatur genau zentrisch in der Formbohrung 20 einstellbar. Die gleiche Wirkung kann erzielt werden, wenn, wie in

Fig. 1 dargestellt, der Kernfuss 46 zentrisch zum Kerndorn 48 liegt und die Halterung 78 in zwei ineinandersteckenden Verstellbuchsen erfolgt, deren ringförmige Berührungsflächen 82 jeweils entsprechende Exzentrizitäten e1 und e2 aufweisen. Für die Buchsen können von aussen betätigbare Drehantriebe vorgesehen werden.

Für die Formbacken 56 ist vorzugsweise innerhalb der Führungsplatten 52 soviel Spiel vorzusehen, dass sie Relativbewegungen in Querrichtung zwischen den Formgehäusen, die an der Platte 10 befestigt sind, und der Zwischenplatte 44 folgen können, die aus unterschiedlichen Wärmedehnungen resultieren. Zusätzlich oder alternativ kann für die Durchgangsbohrungen für die Schrauben 55 in den Führungsplatten 52 ein Übermass vorgesehen werden. Bei der Montage kann eine Grobeinstellung dadurch vorgenommen werden, dass die Schrauben zunächst nur so weit angezogen werden, dass sich die Führungsplatten beim Schliessen der Form über die Formbacken 56 in die sich bei Betriebstemperatur ergebende Lage verschieben können. Wenn diese Lage erreicht ist, werden die Führungsplatten dann durch Anziehen der Schrauben festgelegt. Schwankungen der Betriebstemperatur können durch das Spiel ausgeglichen werden, das durch entsprechende Toleranzen mit positivem Übermass vorgegeben werden kann. Auf diese Weise lassen sich die einzelnen Formbackenpaare 54 jeweils unabhängig voneinander einstellen, ein grosser Vorteil bei Vielfachformen, beispielsweise Formen zur Herstellung von 16 oder auch 32 Preforms.

Achsparallele Verschiebungen der Kerndorne in den Formhohlräumen werden durch unterschiedliche Wärmedehnungen der Platten 42 einerseits und der durch den Heissläufer aufgeheizten Platte 10 andererseits bewirkt. Sie können auch ganz oder teilweise dadurch vermieden bzw. reduziert werden, dass in der Platte 42 eine Heizvorrichtung vorgesehen ist, deren Wärmeabgabe an die Platte 42 in Abhängigkeit von der Isttemperatur an einem repräsentativen Temperaturmesspunkt MP an/in der Platte 10 regelbar ist.

Wie aus dem vorstehenden ersichtlich, sind durch die beschriebene Anordnung alle formbestimmenden Elemente relativ zu der Zentrierung an der Platte 10 gleichachsig einstellbar, so dass Wärmedehnungen in den Platten gleich welcher Grösse und Richtung ohne Einfluss auf die Einzelform sind. Es ist damit möglich, ohne Rücksicht auf Wärmedehnungen die Einzelformgehäuse festzulegen, beispielsweise in Abhängigkeit vom zur Verfügung stehenden Querschnitt in der Spritzgussmaschine. Ein besonderer Vorteil besteht noch darin, dass durch die Aufteilung in Einzelformgehäuse eine Vielzahl gleichartiger Werkstücke kleiner Abmessungen zu bearbeiten sind. Dies führt zu einer wesentlichen Erleichterung der Fertigung. Durch die Aufteilung der Formbacken in Einzelbackenpaare für jede Einzelform und die beschriebene Zentrierung dieser Formbacken durch die jeweiligen Einzelformgehäuse ist es leicht möglich, die Flaschenhalskonturen praktisch ohne Gratbildung und ohne Versatz herzustellen.

In den Platten 8 und 10 sind koaxial zu den Achsen der Formhohlräume Schliessnadeln 84 gelagert, die mit ihrem unteren Ende 86 in der einen Endlage schliessend in den Angusskanal 30 eingreifen. Diese axial verstellbaren Schliessnadeln sind mit einem hydraulischen Antrieb 88 versehen. Der Antrieb erfolgt über den beidseitig beaufschlagbaren Kolben 90, in den die Schliessnadel 81 mit einem Gewinde 92 eingeschraubt ist. Die eingestellte Stellung wird durch eine Kontermutter 94 festgelegt. Die Antriebe 88 sind zweckmässig über eine Zeitsteuerung ansteuerbar. Durch eine solche Zeitsteuerung des Antriebes für die Schliessnadeln lässt sich die Füllung jedes einzelnen der Vielzahl von Formhohlräumen genau einstellen und auf diese Weise eine hohe Gleichförmigkeit des Gewichtes der gespritzten Vorformlinge erreichen. Durch die Zeitsteuerung des Schliesspunktes der Schliessnadeln eventuell in Verbindung mit einer Einstellbarkeit des Einströmquerschnittes lassen sich auch bei einem sehr ausgeglichenen Heissläuferkanalsystem unvermeidbare Unterschiede in der Strömungsgeschwindigkeit des zu verspritzenden Kunststoffes und damit verbundene Gewichtsdifferenzen der Spritzlinge ausgleichen.

Die Erfindung ist im vorstehenden unter Bezug auf die Herstellung von mit einem Flaschenhalsstutzen versehenen Vorformlingen für die Herstellung von Flaschen im Blasverfahren beschrieben. Sie ist aber auch anwendbar für die Herstellung sonstiger Körper, insbesondere solcher, bei denen das Verhältnis sich in Bewegungsrichtung des Werkzeuges erstreckender Länge zu den Abmessungen quer dazu gross ist.

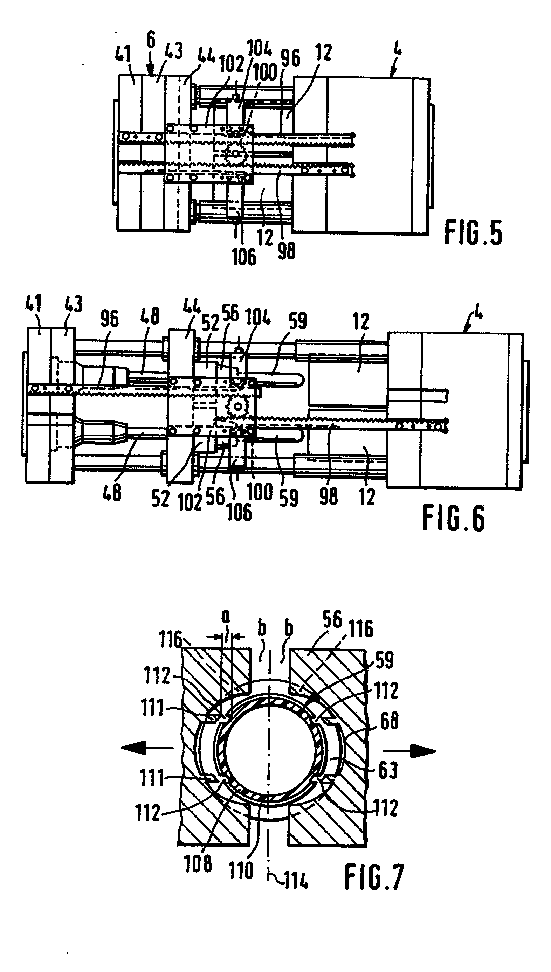

Bei der in den Fig. 5 und 6 in Seitenansicht dargestellten Spritzgiessformen sind an der maschinenfesten Grundplatte 4 einerseits sowie an den Platten 41 und 43 der maschinenbeweglichen Grundplatte 6 andererseits jeweils Zahnstangen 96 und 98 befestigt, die parallel zueinander liegen und mit ihren Verzahnungen aufeinander zu gerichtet sind. Zwischen den beiden Zahnstangen liegt ein mit beiden Zahnstangen in Eingriff stehendes Ritzel 100, das an einer Platte 102 gelagert ist, die ihrerseits an der die Formbacken 56 tragenden Platte 44 befestigt ist. Über die Zahnstangen und das Ritzel wird die Bewegung der Platte 44 derart gesteuert, dass sie sich beim Öffnen und Schliessen der Form jeweils mit der halben Geschwindigkeit der beiden Platten 41 und 43 bewegt. Auf diese Weise wird beim Öffnen der Form ein gleichzeitiges Herausziehen der Vorformlinge 59 aus den Formhohlräumen 20 und der Dorne 48 aus den Vorformlingen sichergestellt.

An die Platte 102 sind weiter zwei Endschalter 104 und 106 befestigt. Diese Endschalter arbeiten mit Anschlägen zusammen, die auf der Rückseite der Zahnstangen 96 und 98 ausgebildet bzw. angeordnet sind.

Über die Endschalter wird die Öffnungsbewegung der Formbackenpaare 54 zweistufig gesteuert, und zwar derart, dass zu Beginn der Öffnungsbewegung der Spritzgiessform die Formbackenpaare 54 zunächst teilweise geöffnet werden, und zwar so weit, dass das Gewinde am Vorformling entformt ist. Dieser Öffnungshub entspricht damit für jede Formbacke etwa der radialen Höhe des Gewindes. Diese Bewegung der Formbacken kann eingeleitet werden, sobald der auf den Formbackenpaaren 54 ausgebildete Zentrierkonus 70 innerhalb der Zentrierbohrung im Inneren des Formgehäuses 16 eine entsprechende Radialbewegung ausführen kann. Die erste Öffnungsbewegung der Formbacken sollte abgeschlossen sein, solange sich der Kerndorn 48 noch in einem zylindrischen bzw. wenig konischen Abschnitt innerhalb des Vorformlings befindet und dieser relativ zum Kerndorn keine oder nur eine geringe Radialbewegung ausführen kann. Ein solcher zylindrischer bzw. weitgehendst zylindrischer Abschnitt ist normalerweise im Bereich der in den Formbacken ausgebildeten Kontur für den Halsabschnitt des Vorformlings vorgesehen.

Die erste Öffnungsbewegung kann durch lösbare Anschläge begrenzt werden. Sie kann aber auch durch eine Zeitsteuerung des hydraulischen Antriebes 67 für die Formbacken vorgegeben werden.

Die in den Formbacken ausgebildete Halskontur für den Vorformling umfasst zusätzlich zur Gewindekontur auch eine Kontur für einen Halsring 63, der zur Halterung des Vorformlings in einer Blasmaschine verwendet wird, in der aus den Vorformlingen später Flaschen geblasen werden. Dieser Halsring 63 hat einen grösseren Aussendurchmesser als das Gewinde. Die Formbacken bleiben daher auch nach Ende der ersten Öffnungsbewegung in Teilberührung mit dem Halsring 63, wie aus Fig. 7 ersichtlich.

In Fig. 7 ist eine Draufsicht auf den Flaschenhalsstutzen eines Vorformlings dargestellt. Zu sehen ist der Halsring 63 und der Gewindestutzen 108 mit dem Gewindegang 110. In der Zeichnung ist weiter die Teilungsebene 114 dargestellt, in der sich die beiden Formbacken in ihrer Schliessstellung berühren. In dem Gewindegang 110 sind hier vier Entlüftungsschlitze 112 vorgesehen, die sich jeweils parallel zur Achse des Gewindes erstrecken und das Gewinde an vier Stellen jeweils bis zum Gewindegrund schneiden. Aus werkzeugtechnischen Gründen sind die diese Nuten formenden Keile 111, die in den Formbacken befestigt sind, mit parallelen Seitenflächen versehen. Die Seitenflächen liegen dabei in Bewegungsrichtung der Formbacken. Damit ist das Entformen an diesen Stellen besonders kritisch. Um ein vollständiges Lösen der die Nuten 112 formenden Keile 111 sicherzustellen, müssen die Formbacken einen Mindesthub von einer Höhe a durchführen, der der Tiefe der Entlüftungsschlitze 112 senkrecht zur Teilungsebene 114 gemessen entspricht und damit etwas grösser ist als die radiale Gewindehöhe.

Falls der Vorformling im Bereich des Flaschenhalsstutzens keinen zylindrischen Abschnitt, sondern nur einen leicht konischen Abschnitt aufweist, ist es erforderlich, der ersten Öffnungsbewegung der Formbacken einen grösseren Weg b zuzuordnen, um ein eventuelles radiales Mitnehmen der Vorformlinge durch eine der Formbacken auszugleichen.

Nach Beendigung der ersten Öffnungsbewegung wird der Vorformling von den Formbacken noch über vier kommaförmige Flächen 116 an der Oberseite und an der Unterseite des Halsringes gehalten. Die Berührung an diesen Flächen reicht aus, um die Zug- und Druckkräfte aufzunehmen, die beim weiteren Entformen des Vorformlinges auf diesen ausgeübt werden müssen. Wie aus dem vorstehenden ersichtlich, kann der tatsächliche Öffnungshub bei der ersten Öffnungsbewegung der Formbacken zwischen der Grösse a und der Grösse b liegen.

Am Schluss oder in der Schlussphase der Öffnungsbewegung der Spritzgiessform wird der Endschalter 106 betätigt, über den dann die Formbacken 56 vollständig geöffnet werden, so dass der Vorformling abfallen kann.

Die beiden Endschalter 104 und 106 können auf der Tragplatte 102 verschiebbar angeordnet sein und dann mit festen Schaltnocken auf den Zahnstangen zusammenwirken. Es ist aber auch möglich, auf den Zahnstangen verschiebbare Schaltnocken vorzusehen und die Schalter selbst fest anzuordnen oder fest angeordnete Schalter mit fest angeordneten Schaltnocken zusammenwirken zu lassen.

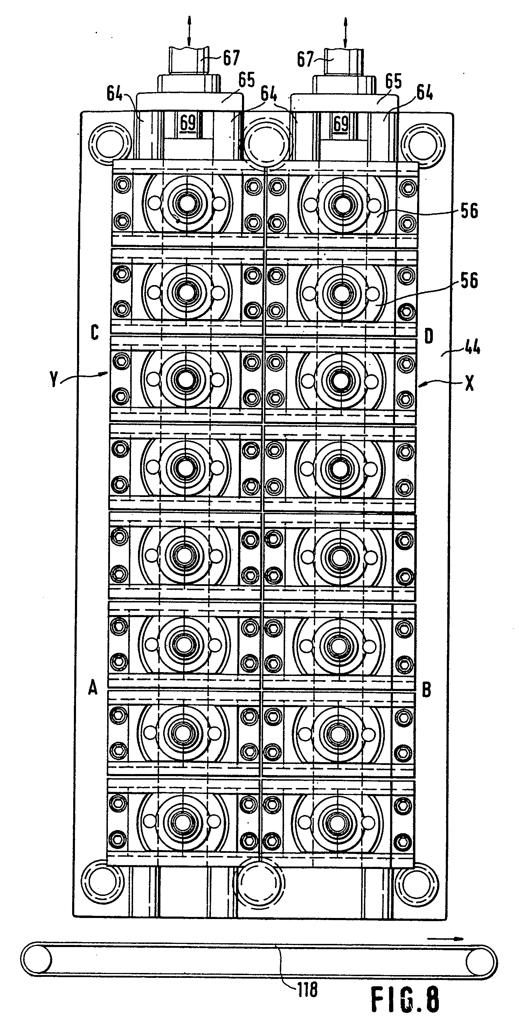

In Fig. 8 ist die Zwischenplatte 44 mit den Formbacken 56 für eine Sechzehnfach-Spritzgiessform dargestellt. Die Spritzgiessform ist dabei in der Maschine so angeordnet, dass jeweils die acht Formgehäuse einer Reihe senkrecht übereinander liegen. Die acht Formbackenpaare 54 jeder der beiden Reihen werden, wie unter Bezug auf Fig. 1 bis 3 beschrieben, jeweils über Betätigungsstangen 64 geöffnet und geschlossen. Die Betätigungsstangen 64 werden jeweils über Hydraulikzylinder 67 betätigt.

Um eine zuverlässige Separierung der einzelnen Vorformlinge beim Abfallen aus der Spritzgiessform zu erzielen, kann unterhalb der Spritzgiessform ein sogenanntes Separierband 118 angeordnet sein, das in Fig. 8 mit einem Bandabschnitt angedeutet ist.

Die Geschwindigkeit dieses Separierbandes ist so zu bemessen, dass die senkrecht abfallenden Vorformlinge nebeneinander auf dem Separierband auftreffen. Dies ist bei gleichzeitigem Öffnen aller Formbackenpaare nur bei sehr hohen Bandgeschwindigkeiten möglich, wobei auch dann nicht verhindert werden kann, dass einzelne Vorformlinge aufeinandertreffen.

Zur Erzielung möglichst kurzer Arbeitszyklen wird angestrebt, die Vorformlinge möglichst frühzeitig aus der Form auszustossen. Dies kann grundsätzlich bei Temperaturen geschehen, bei denen die Vorformlinge noch gummiartig weich sind. Beim Aufeinandertreffen von zwei Vorformlingen kann es dann zu Verschweissungen kommen, die die Vorformlinge unbrauchbar machen.

Um dies zu verhindern, ist erfindungsgemäss eine Programmsteuerung vorgesehen, mit der die Antriebe 67 für die endgültige Öffnung der Formbacken zum Abwerfen der Vorformlinge zeitlich so steuerbar sind, dass eine höhere Separiersicherheit bei niedrigerer Geschwindigkeit des Separierbandes 118 möglich ist. Dies kann beispielsweise dadurch erfolgen, dass bei einer Spritzgiessform mit einer Anordnung der Einzelformen in zwei parallelen Reihen übereinander, also wie in Fig. 8 dargestellt, und einer Bewegung des Separierbandes 118 von links nach rechts zunächst die rechte Reihe X von Formbackenpaaren 54 geöffnet wird und anschliessend mit zeitlicher Verzögerung die linke Reihe Y der Formbackenpaare.

Zweckmässig ist es, eine noch weitergehende Unterteilung des Antriebes für die Formbackenpaare 54 vorzunehmen, und zwar beispielsweise in vier Gruppen, die jeweils am Rand mit A und D bezeichnet sind. Jede Gruppe enthält vier Formbackenpaare. Für die Formbackenpaare jeder Gruppe sind dabei gesonderte Betätigungsstangenpaare vorgesehen, wobei dann auch für jede Gruppe ein gesonderter hydraulischer Antrieb vorzusehen ist. In einem solchen Fall werden die Formbackenpaare, wiederum eine Bewegung des Separierbandes 118 von links nach rechts in Fig. 8 vorausgesetzt, in der Reihenfolge B-A-D-C geöffnet werden. Eine solche zeitlich verzögerte Ansteuerung der hydraulischen Antriebe 67 für die vier Formbackengruppen A bis D ermöglicht eine sehr sichere Separierung bei niedrigen Geschwindigkeiten des Separierbandes ohne wesentliche Verlängerung der Zykluszeiten.

Niedrigere Geschwindigkeiten des Separierbandes ermöglichen im übrigen kurze Kühltunnellängen, wenn die Vorformlinge wie üblich auf dem Separierband durch den Kühltunnel hindurchgeführt werden.

**Patentansprüche**

1. Mehrfach-Spritzgiessform für mit einem Flaschenhalsstutzen versehene Vorformlinge für die Herstellung von Flaschen im Blasverfahren, mit
– einer düsenseitigen in der Spritzgiessmaschine feststehenden Platte (10), an der Aussenformen (12) angeordnet sind, die einen im wesentlichen zylindrischen Aussenabschnitt der Vorformlinge bilden,
– Formelementen für die den Boden bildenden Kontur, in denen jeweils der Angusskanal (30) ausgebildet ist, der mit einem Heissläuferverteilersystem (32) in der feststehenden Platte (10) in Verbindung steht und in die jeweils eine Angussverschlussnadel (84) eingreift, die über einen Antrieb in Achsrichtung verstellbar ist,
– einer in der Spritzgiessmaschine beweglichen Kernträgerplatte (43), an der die in die Aussenform (12) eingreifenden Kerne (48) mit ihren Füssen (46) befestigt sind,
– quer zur Achse der Aussenform (12) verschiebbaren Formbackenpaaren (54) mit einer die Aussenform (12) des Flaschenhalsstutzens mit einem Gewinde und einem Halsring mit einem grösseren Durchmesser als das Gewinde formenden Innenkontur, die mittig zum Flaschenhalsstutzen geteilt und an einer Zwischenplatte (44) angeordnet sind, die zum Herausziehen der Kerne (48) aus dem Vorformling entgegen der Öffnungsrichtung der Form relativ zur Kerntragplatte (43) verstellbar ist,
– und wenigstens einem Hydraulikantrieb (67) für die Formbackenpaare, dadurch gekennzeichnet, dass die Aussenformen (12) Innengehäuse (16) aufweisen, die jeweils von separaten Aussengehäusen (14) umgeben sind, die stirnseitig gegen die feststehende Platte (10) verschraubt sind, dass jeder Aussenform (12) ein separates Formbackenpaar (54) zugeordnet ist, dass an jedem Formbackenpaar (54) ein mit dem Flaschenhalsstutzen koaxialer Aussenkonus (70; 72) ausgebildet ist, der mit einem Innenkonus der Aussenform (12) zusammenwirkt und ein mit dem Flaschenhalsstutzen koaxialer Innenkonus (74) ausgebildet ist, der mit einem Aussenkonus auf dem Kern (48) zusammenwirkt, dass jedes Formbackenpaar (54) jeweils auf einer gesonderten Führung (53) gelagert ist, die sich quer zur Öffnungsrichtung der Spritzgiessform erstreckt und dass jeweils für eine Mehrzahl nebeneinander angeordneter Formbackenpaare ein gemeinsamer Hydraulikantrieb (67) zum Öffnen und Schliessen der Formbackenpaare vorgesehen ist.

2. Mehrfach-Spritzgiessform nach Anspruch 1, dadurch gekennzeichnet, dass die einzelnen Führungen (53) auf der Zwischenplatte (44) in deren Ebene einstellbar befestigt sind.

3. Mehrfach-Spritzgiessform nach Anspruch 1, dadurch gekennzeichnet, dass die Kerne mit einem zylindrischen Fussabschnitt (46) versehen sind, dessen Achse exzentrisch zur Achse des formgebenden Abschnittes des Kernes liegt und der in einer exzentrischen Bohrung einer in der Kerntragplatte (43) drehbar gelagerten Buchse (82) drehbar ist.

4. Mehrfach-Spritzgiessform nach Anspruch 1, dadurch gekennzeichnet, dass die Kerne mit einem mit dem formgebenden Abschnitt des Kernes koaxialen zylindrischen Fuss (46) versehen sind und dass der Fussabschnitt über zwei ineinanderliegenden drehbaren Buchsen (80, 82) in der Kerntragplatte (43) gehalten ist, deren Bohrungen jeweils exzentrisch angeordnet sind.

5. Mehrfach-Spritzgiessform nach Anspruch 1, dadurch gekennzeichnet, dass in der Zwischenplatte (44) quer zur Bewegungsrichtung der Formbacken (56) über einen Antrieb (67) verschiebbare Betätigungsstangenpaare (64) gelagert sind, die mit unter einem spitzen Winkel zur Bewegungsrichtung verlaufenden Führungsnuten (66) versehen sind, in die an den Formbacken (56) angeordnete Schubstifte (58) eingreifen.

6. Mehrfach-Spritzgiessform nach Anspruch 1, dadurch gekennzeichnet, dass Antriebsmittel vorgesehen sind, mit denen die Zwischenplatte (44) während der Öffnungsbewegung der Kernträgerplatte (43) gleichzeitig relativ zu dieser verstellbar ist und dass Steuermittel vorgesehen sind, mit denen den Formbackenpaaren (54) während der Öffnungsbewegung der Spritzgiessform nach Freikommen der an den Formbacken (56) ausgebildeten Zentrierkonen (70, 72) von den Innenkonen in den Aussenformen (12) eine erste Öffnungsbewegung über einen Weg erteilt wird, der grösser ist als die radiale Höhe des Gewindes, aber kleiner als die radiale Höhe des Halsringes, und dass weitere Steuermittel (106) vorgesehen sind, mit denen den Formbackenpaaren die Restöffnungsbewegung erteilt wird, nachdem die Vorformlinge von den Kernen (48) gelöst sind.

7. Mehrfach-Spritzgiessform nach Anspruch 6, dadurch gekennzeichnet, dass mit der feststehenden Platte (10) und der Kernträgerplatte (43) jeweils parallel zueinander im Abstand liegende und mit ihrer Verzahnung aufeinander zu gerichtete Zahnstangen (96, 98) verbunden sind, und dass an der die Formbackenpaare (54) tragenden Zwischenplatte (44) Ritzel (100) angeordnet sind, die mit den Verzahnungen an beiden Zahnstangen in Eingriff stehen und so die Zwischenplatte beim Öffnen mit der halben Geschwindigkeit der Kerntragplatte bewegen, und dass als Steuermittel an der die Formbackenpaare tragenden Zwischenplatte Schalter (104, 106) befestigt sind, die über Schaltnocken an den Zahnstangen betätigbar sind.

8. Mehrfach-Spritzgiessform nach Anspruch 6, dadurch gekennzeichnet, dass jeweils für eine Gruppe (A, B, C, D) von Formbackenpaaren (54) gesonderte Antriebsmittel vorgesehen sind, und dass Steuermittel vorgesehen sind, mit denen die Antriebe für die einzelnen Gruppen während der Restöffnungsbewegung jeweils zeitlich aufeinanderfolgend betätigt werden.

9. Mehrfach-Spritzgiessform nach Anspruch 8, dadurch gekennzeichnet, dass die Antriebe einzelner Gruppen von Formbackenpaaren über eine Programmsteuerung betätigbar sind.

**Claims**

1. A multiple injection mould for making preforms provided with a bottle neck socket for the manufacture of bottles by a blow moulding method, comprising
   - a fixed plate (10) on the nozzle side of the injection moulding machine, at which are provided outer moulds (12) each defining a substantially cylindrical outer section of the preforms,
   - mould elements for the mould contour forming the base, on each of which is formed the filling channel (30) which is connected to a hot runner distributor system (32) arranged in the fixed plate (10), and which is engaged with a valve closure needle (84) each, which is adjustable in axial direction by a drive,
   - a core-carrying plate (43) movable within the injection moulding machine on to which the cores (48) engaging said outer moulds are fixed by their feet (46),
   - pairs of mould end plates (54) movable at right angles to the axis of said outer mould (12) having an internal contour which moulds the outer mould (12) of the bottle neck socket to have a thread and a neck ring of greater diameter than the thread, said mould end plates being divided centrally in respect to the bottle neck socket and provided on an intermediate plate (44), which is adjustable relative to said core-carrying plate (43) in order to withdraw said cores (48) from the preform in a direction opposite to the direction in which the mould opens,
   - and at least one hydraulic drive (67) for the pairs of said mould end plates,
   characterised in that the outer moulds (12) comprise inner housings (16) each of which is enclosed in a separate external housing (14) which are secured at their ends adjacent said fixed plate to said fixed plate (10), that a separate pair of said mould end plates (54) is assigned to each of said outer moulds (12), that each pair of said mould end plates (54) has an outer frusto-conical surface (70; 72) which is coaxial with the socket of the bottle neck and cooperates with an internal frusto-conical surface of the outer mould (12), and has an internal frusto-conical surface (74) which is coaxial with the socket of the bottle neck and cooperates with an outer frusto-conical surface on the core (48), that each pair of said mould end plates (54) is mounted in a separate guide (53) extending at right angles to the direction of opening of the injection mould, that a common hydraulic drive (67) is provided for a plurality of adjacent pairs of said mould end plates to open and close the pairs of said mould end plates,

2. A multiple injection mould according to Claim 1, characterised in that the individual guides (53) are mounted on said intermediate plate (44) and are adjustable in the plane of said intermediate plate.

3. A multiple injection mould according to Claim 1, characterised in that the cores are provided with a cylindrical foot section (46), the axis of which is situated eccentrically with respect to the axis of the moulding section of said core and which is rotatable in an eccentric bore of a sleeve (82) being rotatable in said core-carrying plate (43).

4. A multiple injection mould according to Claim 1, characterised in that the cores are provided with a cylindrical foot (46) coaxial with the moulding section of said core and that the foot section is mounted in the core-carrying plate (43) by two rotatable sleeves (80, 82) placed one within the other, the bores of which are provided, in each case, eccentrically.

5. A multiple injection mould according to Claim 1, characterised in that pairs of operating bars (64) are mounted in said intermediate plate (44) at right angles to the direction of movement of said mould end plates (56) which are movable by a drive (67) and are provided with guide grooves (66) extending at an acute angle to the direction of motion, which engage with thrust pins (58) located at said mould end plates (56).

6. A multiple injection mould according to Claim 1, characterised in that driving means are provided by which said intermediate plate (44) is adjustable relative to said core-carrying plate (43) during the opening movement of the latter, and that control means are provided, by which during the opening movement of the injection mould after release of said centering frusto-conical surfaces (70, 72) formed on the mould end plates (56) from said inner frusto-conical surfaces formed in said outer moulds (12) the pairs of mould end plates (54) are constrained to move through a first opening movement over a path which is greater than the radial height of the thread, but smaller than the radial height of said neck ring, and that additional control means (106) are provided by which said perrs of mould end plates are constrained to preform the residual opening movement after the preforms have been released from said cores (48).

7. A multiple injection mould according to Claim 6, characterised in that toothed racks (96, 98) positioned parallel to one another and at a distance from each other with their teeth directed towards one another are connected to said fixed plate (10) and said core-carrying plate (43), and that pinions (100) are arranged on said intermediate plate (44) which carries said pairs of mould end plates (54), said pinions engaging with the teeth of said two racks, thereby to move said intermediate plate during opening with half the velocity of said core-carrying plate, and that as control means fixed to said intermediate plate which carries said pairs of mould end plates switches (104, 106) are operable by cams on said toothed racks.

8. A multiple injection mould according to Claim 6, characterised in that separate driving means are provided, in each case, for separate groups (A, B, C, D) of pairs of said mould end plates (54) and that control means are provided by which the drives for said separate groups are each operated one after the other in a time sequence during the residual opening movement.

9. A multiple injection mould according to Claim 8, characterised in that the drives for the separate groups of pairs of said mould end plates are operable by a programmed control means.

**Revendications**

1. Moule d'injection multiple pour préforms munies d'une tubulure de goulot de bouteille pour la fabrication de bouteilles par le procédé de soufflage, avec
– une plaque (10) disposée à poste fixe du côté de l'injecteur dans la machine d'injection, sur laquelle sont disposées des enveloppes extérieures (12) de moule formant une partie extérieure sensiblement cylindrique des préformes.
– des éléments de moule pour le contour formant le fond dans lesquels est formé le canal de carotte (30) qui est en liaison avec un système distributeur à boîte chaude (32) dans la plaque fixe (10), et dans chacun desquels s'engage une aiguille de fermeture de carotte (84) qui est réglable dans le sens axial sous l'action d'une commande d'entraînement,
– une plaque support de noyau (43) mobile dans la machine d'injection, sur laquelle sont fixés par leurs pieds (46) les noyaux (48) qui s'engagent dans le moule extérieur (12),
– des paires de coquilles de moule (54) déplaçables transversalement par rapport à l'axe du moule extérieur (12) présentant un contour intérieur formant le moule extérieur (12) de la tubulure de goulot de bouteille munie d'un filetage et d'un anneau de goulot avec un diamètre supérieur à celui du filetage, ces coquilles étant partagées en deux au milieu de la tubulure de goulot de bouteille et étant disposées sur une plaque intermédiaire (44) qui, pour faire sortir les noyaux (48) hors de la préforme, peut se déplacer par rapport à la plaque support de noyau (43) dans le sens opposé à celui de l'ouverture du moule.
– et au moins une commande hydraulique (67) pour les paires de coquilles de moule, caractérisé par le fait que les moules extérieurs (12) comportent des enveloppes intérieures (16) qui sont entourées par des enveloppes extérieures (14) séparées, lesquelles sont visées du côté de devant contre la plaque (10) fixe, qu'à chaque moule extérieur (12) est associée une paire de coquilles de moule (54) séparée, que sur chaque paire de coquilles de moule (54) est formé un cône extérieur (70, 72) coaxial à la tubulure de goulot de bouteille qui coopère avec un cône intérieur du moule extérieur (12) et qu'il est formé un cône intérieur (74) coaxial à la tubulure de goulot de bouteille qui coopère avec un cône extérieur prévu sur le noyau (48), que chaque paire de coquilles de moule (54) est montée dans un guidage (53) séparé qui s'étend transversalement par rapport au sens de l'ouverture du moule d'injection, et qu'il est prévu pour une multiplicité de paires de coquilles de moule disposées l'une à côté de l'autre une commande hydraulique (67) commune pour l'ouverture et la fermeture des paires de coquilles de moule.

2. Moule d'injection multiple selon la revendication 1, caractérisé par le fait que les différents guidages (53) sont fixés réglables dans leur plan sur la plaque intermédiaire (44).

3. Moule d'injection multiple selon la revendication 1, caractérisé en ce que les noyaux sont pourvus d'un pied (46) cylindrique dont l'axe est excentré par rapport à l'axe de la partie du noyau donnant la forme et qui peut tourner dans un alésage excentrique d'une douille (82) montée rotative dans la plaque support de noyau (43).

4. Moule d'injection multiple selon la revendication 1, caractérisé en ce que les noyaux sont pourvus d'un pied (46) cylindrique coaxial à la partie du noyau donnant la forme et que le pied est maintenu dans la plaque support de noyau (43) à l'aide de deux douilles (80, 82) rotatives placées l'une dans l'autre dont les alésages respectifs sont excentrés.

5. Moule d'injection multiple selon la revendication 1, caractérisé par le fait que, dans la plaque intermédiaire (44), sont montées des paires de barres d'actionnement (64) pouvant coulisser transversalement par rapport au sens de mouvement des coquilles de moule (56) sous l'action d'une commande d'entraînement (67), qui sont munies de rainures de guidage (66) faisant un angle aigu avec le sens du mouvement dans lesquelles s'engagent des doigts de poussée (58) disposés sur les coquilles de moule (56).

6. Moule d'injection multiple selon la revendication 1, caractérisé en ce qu'il est prévu des moyens d'entraînement grâce auxquels, pendant le mouvement d'ouverture de la plaque support de noyau (43), la plaque intermédiaire (44) peut se déplacer par rapport à cette dernière, et qu'il est prévu des moyens de commande avec lesquels, pendant le mouvement d'ouverture du moule d'injection et après que les cônes de centrage (70, 72) formés sur les coquilles de moule (56) se sont dégagés des cônes intérieures dans les moules extérieurs (12), il est imprimé aux paires de coquilles de moule (54) un premier mouvement d'ouverture sur un parcours qui est plus grand que la hauteur radiale du filetage mais plus petite que la hauteur radiale de l'anneau de goulot, et qu'il est prévu d'autres moyens de commande (106) avec lesquels est imprimé aux paires de coquilles de moule le mouvement d'ouverture restant à effectuer après que les préformes se sont détachées des noyaux (48).

7. Moule d'injection multiple selon la revendication 6, caractérisé par le fait que sont reliées respectivement à la plaque fixe (10) et à la plaque suppport de noyau (43) des crémaillères (96, 98) parallèles situées à une certaine distance l'une de l'autre et dont les dentures respectives sont dirigées l'une vers l'autre, et que, sur la plaque intermédiaire (44) portant les paires de coquilles de moule (54), sont disposés des pignons (100) qui engrènent avec les dents des deux crémaillères et, ainsi, lors de l'ouverture, déplacent la plaque intermédiaire à une vitesse deux fois moins grande que la plaque support de noyau, et que sont fixés comme moyens de commande sur la plaque intermédiaire portant les paires de coquilles de moule des commutateurs (104, 106) qui sont actionnés par des cames de contacteur disposées sur les crémaillères.

8. Moule d'injection multiple selon la revendication 6, caractérisé en ce que des moyens d'entraînement particuliers sont prévus pour chaque groupe (A, B, C, D) de paires de coquilles de moule (54) et qu'il est prévu des moyens de commande avec lesquels les moyens d'entraînement pour les différents groupes sont actionnés successivement dans le temps pendant le mouvement d'ouverture définitif.

9. Moule d'injection multiple selon la revendication 8, caractérisé en ce que les moyens d'entraînement des différents groupes de paires de coquilles de moule sont actionnés par l'intermédiaire d'une commande à programme.

FIG.1

**FIG.2**

**FIG.3**

**FIG.4**

FIG.5

FIG.6

FIG.7

FIG.8